# EUROPÄISCHE PATENTSCHRIFT

(11) **EP 3 459 133 B1**
(45) Veröffentlichungstag und Bekanntmachung des Hinweises auf die Patenterteilung: **10.06.2020**
(21) Anmeldenummer: 17727502.1
(22) Anmeldetag: 16.05.2017
(51) Int. Cl.: H01M 2/34, H01M 10/48, H02J 7/00, H01M 2/02

(54) **ELEKTRISCHE ENERGIESPEICHERZELLE MIT INTEGRIERTER ÜBERBRÜCKUNGSEINRICHTUNG**
ELECTRICAL ENERGY STORAGE CELL WITH INTEGRATED BRIDGING DEVICE
CELLULE D'ACCUMULATION D'ÉNERGIE ÉLECTRIQUE À DISPOSITIF DE PONTAGE INTÉGRÉ

(30) Priorität: 17.05.2016 DE 102016208421
(43) Veröffentlichungstag der Anmeldung: 27.03.2019
(73) Patentinhaber: Fraunhofer-Gesellschaft zur Förderung der angewandten Forschung e.V., 80686 München (DE)
(72) Erfinder: WALLER, Reinhold, 91077 Neunkirchen/Br. (DE); LORENTZ, Vincent, 91056 Erlangen (DE); MÄRZ, Martin, 90491 Nürnberg (DE)
(74) Vertreter: Gagel, Roland
(86) Internationale Anmeldenummer: PCT/EP2017/061655
(87) Internationale Veröffentlichungsnummer: WO 2017/198636

(56) Entgegenhaltungen:
- EP-A2- 2 642 582
- US-A1- 2013 115 511

## Beschreibung

### Technisches Anwendungsgebiet

Die vorliegende Erfindung betrifft eine elektrische Energiespeicherzelle, die ein zumindest teilweise elektrisch leitfähiges Gehäuse, wenigstens zwei Pole am elektrisch leitfähigen Gehäuse, von denen ein erster Pol gegenüber dem Gehäuse isoliert und ein zweiter Pol elektrisch leitend mit dem Gehäuse verbunden ist, und eine Überbrückungseinrichtung aufweist, die sich durch ein externes Signal ansteuern lässt, um die beiden Pole der Energiespeicherzelle elektrisch miteinander zu verbinden.

Elektrische Energiespeicherzellen, insbesondere galvanische Zellen, werden zur Bildung einer Batterie in der Regel in Reihe miteinander verschaltet. Die Zuverlässigkeit des Gesamtsystems, d.h. der aus den einzelnen Zellen gebildeten Batterie, stellt dabei ein wichtiges Kriterium dar. Ohne weitere Maßnahmen fällt bei Ausfall einer Zelle in einer derartigen Reihenschaltung das gesamte System aus, obwohl die Batterie noch immer eine ausreichende Anzahl von intakten Zellen umfasst. Defekte Zellen müssen daher während des Betriebs elektrisch überbrückt werden, um diese Problematik zu vermeiden. Hierbei ist es bekannt, die einzelnen Zellen jeweils mit einem Überbrückungselement zu versehen, das im Fehlerfall entweder automatisch oder durch externe Auslösung eine elektrische Verbindung zwischen den Polen der fehlerhaften Zelle herstellt und diese damit in der Reihenschaltung überbrückt.

### Stand der Technik

So zeigt beispielsweise die DE 37 21 754 A1 eine Überbrückungseinrichtung zur Sicherung der Energiespeicherzellen einer Batterie, die eine irreversible Überbrückung von hochohmig ausfallenden, zerstörten Speicherzellen ermöglicht. Die Überbrückungseinrichtung besteht aus zwei schichtweise in Serie angeordneten Halbleiterbauelementen mit jeweils unterschiedlicher Strom/Spannungs-Charakteristik. Bei hochohmigem Ausfall einer zerstörten Speicherzelle fließt der hohe Ladestrom durch die beiden Halbleiterbauelemente, die aufgrund der daraus resultierenden starken Temperaturerhöhung durchlegieren und die Speicherzelle dadurch irreversibel niederohmig kurzschließen. Eine derartige passive Überbrückungseinrichtung wird allerdings nur ausgelöst, wenn die Akkumulatorzelle bereits stark degradiert ist. Ein vorzeitiges Auslösen, etwa zur Verhinderung hoher Verlustleistungen, ist nicht möglich,

Die Druckschrift US 2013/115511 A1 offenbart eine Sekundärbatterie mit jeweils einem ersten Pol 152 und einem zweiten Pol 153, die durch eine elektrisch leitende Deckelplatte 151 der Sekundärbatterie hindurchragen. An der zweiten Elektrode 153 ist eine Überbrückungseinrichtung angeordnet, die im Falle eines in der Batterie entstehenden Überdruckes einen Kurzschluss zwischen der zweiten Elektrode und der elektrisch leitenden Deckelplatte 151 herstellt.

Aus der DE 10 2012 005 979 A1 ist ein elektrisches Überbrückungselement für die Überbrückung von defekten Speicherzellen in Energiespeichern beschrieben, das sich prinzipiell auch für Batterien hoher elektrischer Leistung eignet. Bei diesem Überbrückungselement ist zwischen zwei elektrischen Leitern eine Schichtfolge mit wenigstens einer elektrischen Isolationsschicht und einem oder mehreren reaktiven Schichtstapeln ausgebildet, in denen sich eine exotherme Reaktion auslösen lässt. Die reaktiven Schichtstapel und die Isolationsschicht sind so aufeinander abgestimmt, dass sich die Isolationsschicht durch die bei der exothermen Reaktion abgegebene Wärmeenergie auflöst und eine elektrische Verbindung zwischen den elektrischen Leitern hergestellt wird.

Die US 2012/0315518 beschreibt ein elektrisch triggerbares Überbrückungselement auf Basis eines durch ein Heizelement schmelz- bzw. erweichbaren Isolierkörpers zwischen zwei elektrischen Kontakten. Diese elektrischen Kontakte werden mit den beiden Polen der im Bedarfsfall zu überbrückenden Energiespeicherzelle verbunden. Um die Triggerenergie niedrig zu halten, muss der Isolierkörper aus niedrig schmelzendem Material bestehen. Wachsartige Materialien sind dafür zwar prinzipiell geeignet. Diese Materialien neigen jedoch am oberen Ende des Temperaturbereichs vieler Speicherzellen, beispielsweise üblicher Li-Ionen-Zellen (60 bis 80°C), bereits zu starkem Kriechen, wodurch die Gefahr einer ungewollten Auslösung des Überbrückungselementes mit der Zeit ansteigt. Damit kann somit keine Langzeitstabilität erreicht werden. Wird als Isolierkörper ein etwas stabileres, niedrig schmelzendes Material eingesetzt, so ist zum Auslösen eine deutlich erhöhte Triggerenergie erforderlich. So benötigt ein Plättchen von 5x5x1 mm³ aus LD-Polyethylen beispielsweise zur Erwärmung von Raumtemperatur auf eine Erweichungstemperatur von 100°C eine Energiemenge von etwa 3,5 J. Weiterhin besteht bei diesem Überbrückungselement auch die Gefahr, dass Reste des Isolationsmaterials im Kontaktbereich verbleiben, wodurch der Restwiderstand bei ausgelöstem Überbrückungselement sehr hohe Parameterschwankungen zeigen kann.

Ein prinzipielles Problem bei den bisher verfügbaren Lösungen stellen die Gesamtkosten für die Realisierung eines Batteriesystems aus mehreren Speicherzellen dar, zu denen insbesondere die Montagekosten für die Anbringung der Überbrückungseinrichtungen an die einzelnen Speicherzellen beitragen. Dieser Montageaufwand kann auch die Fehleranfälligkeit des Batteriesystems erhöhen.

Die Aufgabe der vorliegenden Erfindung besteht darin, eine elektrische Energiespeicherzelle mit einer Überbrückungseinrichtung bereitzustellen, die sich kostengünstig herstellen lässt und eine hohe mechanische Robustheit aufweist.

### Darstellung der Erfindung

Die Aufgabe wird mit der elektrischen Energiespeicherzelle gemäß Patentanspruch 1 gelöst. Vorteilhafte Ausgestaltungen der Energiespeicherzelle sind Gegenstand der abhängigen Patentansprüche oder lassen sich der nachfolgenden Beschreibung sowie den Ausführungsbeispielen entnehmen.

Die vorgeschlagene Energiespeicherzelle weist ein zumindest teilweise elektrisch leitfähiges Gehäuse, wenigstens zwei Pole bzw. Zellenanschlüsse am Gehäuse sowie eine Überbrückungseinrichtung auf, die sich durch ein externes Signal ansteuern lässt, um die beiden Pole der Energiespeicherzelle bei Bedarf elektrisch miteinander zu verbinden. Die Überbrückungseinrichtung wird durch ein externes Triggersignal, beispielsweise einen Strom- oder Spannungspuls, ausgelöst. Ein erster Pol der Energiespeicherzelle ist dabei gegenüber dem Gehäuse isoliert und ein zweiter Pol elektrisch leitend mit dem Gehäuse verbunden, wie dies bei Energiespeicherzellen üblich ist. Die vorgeschlagene Energiespeicherzelle zeichnet sich dadurch, dass die Überbrückungseinrichtung zwischen dem ersten Pol und dem Gehäuse der Energiespeicherzelle wirkt.

Das Gehäuse muss dabei nicht vollständig elektrisch leitfähig ausgebildet sein, wenigstens jedoch in einem Gehäusebereich zwischen den beiden Polen, der die beiden Pole umfasst oder zumindest nahe an die beiden Pole heranreicht. Vorzugsweise ist das Gehäuse jedoch vollständig elektrisch leitfähig ausgebildet.

Bei der vorgeschlagenen Ausgestaltung der Energiespeicherzelle mit der Überbrückungseinrichtung wirkt der Überbrückungsmechanismus zwischen dem ersten Pol und einer Kontaktstelle am Gehäuse bzw. am elektrisch leitfähigen Gehäusebereich. Dies ermöglicht einen robusten Aufbau, da die Überbrückungseinrichtung nicht mechanisch mit beiden Polen der Energiespeicherzelle verbunden werden muss. Damit ist auch eine Reduzierung der Herstellungs-, insbesondere Montagekosten von Batteriesystemen verbunden, in denen derartige Energiespeicherzellen eingesetzt werden. Bei der vorgeschlagenen Ausgestaltung lässt sich die Überbrückungseinrichtung auch direkt in die Energiespeicherzelle integrieren.

In einer bevorzugten Ausgestaltung ist die Überbrückungseinrichtung daher in den ersten Pol der Energiespeicherzelle integriert, der hierzu entsprechend ausgeformt ist.

Erfindungsgemäß stellt die Überbrückungseinrichtung bei der Ansteuerung mit dem externen Signal eine elektrische Verbindung zwischen einem ersten und einem zweiten elektrischen Leiter her, wobei der erste elektrische Leiter mit dem ersten Pol der Energiespeicherzelle verbunden ist oder durch den ersten Pol der Energiespeicherzelle gebildet wird. Der zweite elektrische Leiter ist mit dem Gehäuse der Energiespeicherzelle verbunden.

In einer bevorzugten Ausgestaltung weist die Überbrückungseinrichtung ein elektrisch leitfähiges Überbrückungselement auf, das durch ein elastisches Element gebildet oder mit einem elastischen Element verbunden ist. Das elastische Element wird durch einen Rückhaltedraht in einem vorgespannten ersten Zustand gehalten und geht bei Durchtrennung oder Lösung des Rückhaltedrahtes in einen zweiten Zustand über, in dem es den ersten und zweiten elektrischen Leiter über das elektrisch leitfähige Überbrückungselement elektrisch miteinander verbindet. Bei Ansteuerung der Überbrückungseinrichtung mit dem externen Signal wird der Rückhaltedraht entsprechend durchtrennt oder gelöst. Dies kann durch einen geeignet hohen Strom oder Strompuls erfolgen, der durch den Rückhaltedraht geleitet wird, wodurch dieser schmilzt oder durchbrennt. Der Rückhaltedraht kann auch aus einem reaktiven Material gebildet sein, in dem sich durch den Strom oder Strompuls eine exotherme Reaktion auslösen lässt, durch die der Rückhaltedraht seine Rückhaltewirkung verliert.

In einer Weiterbildung der vorangehend erläuterten bevorzugten Ausgestaltung sind der erste und zweite elektrische Leiter so angeordnet, dass wenigstens ein erster in eine Raumrichtung orientierter Oberflächenbereich des ersten Leiters über einen Spalt von wenigstens einem zweiten in die gleiche Raumrichtung orientierten Oberflächenbereich des zweiten Leiters beabstandet ist. Unter der Orientierung eines Oberflächenbereiches in eine Raumrichtung ist dabei zu verstehen, dass der Oberflächenbereich aus dieser Raumrichtung als Flächenbereich zu erkennen ist. Hiermit soll vor allem klargestellt werden, dass die beiden Oberflächenbereiche weder gegeneinander gerichtet sind, noch unter einem senkrechten Winkel zueinander stehen. Das Überbrückungselement ist über den beiden Oberflächenbereichen angeordnet und mit dem elastischen Element so verbunden, dass das elastische Element bei Durchtrennung oder Lösung des Rückhaltedrahtes das Überbrückungselement gegen die Oberflächenbereiche der beiden elektrischen Leiter drückt. Überbrückungselement und elastisches Element sind hier als getrennte Elemente ausgeführt, wobei das Überbrückungselement eine ausreichende Steifigkeit aufweisen muss. Das Überbrückungselement kann hierzu beispielsweise als Metallplättchen oder als Teil einer Leiterplatte mit Oberflächenmetallisierung ausgeführt sein. Als elastisches Element kann beispielsweise ein Federelement eingesetzt werden.

Erfindungsgemäß sind die oben genannten Oberflächenbereiche der elektrischen Leiter und/oder eine zu diesen Oberflächenbereichen gerichtete Seite des Überbrückungselementes mit einer lotfähigen, elektrisch leitfähigen Beschichtung versehen und es ist ein zusätzliches reaktives Element über den Oberflächenbereichen angeordnet, beispielsweise als weitere Schicht des Überbrückungselementes oder als separates Element, in dem durch die Ansteuerung der Überbrückungseinrichtung mit dem externen Signal eine exotherme Reaktion ausgelöst wird, durch deren Wärmeentwicklung die lotfähigen Schichten miteinander verschmelzen und/oder eine Lotverbindung zwischen dem Überbrückungselement und den beiden elektrischen Leitern herstellen. Bei einer Ausbildung als separates Element liegt das reaktive Element vorzugsweise am Überbrückungselement an, ist aber nicht stoffschlüssig mit dem Überbrückungselement verbunden.

Ein Beispiel für ein reaktives Element bzw. eine reaktive Schicht ist eine reaktive Nanofolie, bspw. eine reaktive Ni/Al-Folie, wie sie bspw. aus der WO 01/83182 A1 bekannt ist. Derartige Nanofolien setzen sich aus einer großen Anzahl von Nanoschichten zusammen, bspw. mit Schichtdicken im Bereich von 1 nm bis 500 nm, wobei sich in der Regel Schichten aus zwei unterschiedlichen Materialien abwechseln, die durch geeigneten Energieeintrag exotherm miteinander reagieren. Auch andere reaktive Schichten sind im vorgeschlagenen Überbrückungselement einsetzbar, bspw. Schichten aus Nanothermit oder anderen exotherm reagierenden Materialien.

In einer alternativen Weiterbildung der vorangehend erläuterten bevorzugten Ausgestaltung ist das elektrisch leitfähige Überbrückungselement selbst als elastisches Element ausgebildet. Vorzugsweise handelt es sich dabei um ein plattenförmiges Element, das an einem Ende mit dem ersten elektrischen Leiter fest verbunden und durch den Rückhaltedraht in einem gebogenen, vorgespannten Zustand vom zweiten elektrischen Leiter beabstandet gehalten wird. Bei Durchtrennen oder Lösen des Rückhaltedrahtes bewegt es sich dann aufgrund seiner Vorspannung gegen den zweiten elektrischen Leiter und schließt dadurch den Kontakt zwischen den beiden elektrischen Leitern.

Erfindungsgemäß sind der erste und zweite elektrische Leiter wiederum so angeordnet, dass wenigstens ein erster in eine Raumrichtung orientierter Oberflächenbereich des ersten Leiters über einen Spalt von wenigstens einem zweiten in die gleiche Raumrichtung orientierten Oberflächenbereich des zweiten Leiters beabstandet ist. Über den beiden Oberflächenbereichen ist ein elektrisch leitfähiges Überbrückungselement angeordnet,
wobei die Oberflächenbereiche und/oder eine zu den Oberflächenbereichen gerichtete Seite des Überbrückungselementes mit einer lotfähigen, elektrisch leitfähigen Beschichtung versehen sind. Weiterhin ist ein reaktives Element, insbesondere in Form einer reaktiven Nanofolie, über den beiden Oberflächenbereichen angeordnet, in dem durch die Ansteuerung der Überbrückungseinrichtung mit dem externen Signal eine exotherme Reaktion ausgelöst wird, durch deren Wärmeentwicklung die lotfähigen Schichten miteinander

verschmelzen und/oder eine Lotverbindung zwischen dem Überbrückungselement und den beiden elektrischen Leitern herstellen. Das reaktive Element kann dabei als reaktive Schicht Bestandteil des Überbrückungselementes oder auch als separates Element angeordnet sein. Bei einer Ausbildung als separates Element liegt das reaktive Element vorzugsweise am Überbrückungselement an, ist aber nicht stoffschlüssig mit dem Überbrückungselement verbunden.

Die letztgenannten Ausgestaltungen mit dem Rückhaltedraht und der reaktiven Schicht bzw. dem reaktiven Element haben den Vorteil, dass die Auslösung der Überbrückungseinrichtung durch einen elektrischen Impuls mit einer Triggerenergie zwischen 10 und 1000 mJ erfolgen kann. Dadurch wird die Gefahr einer Fehlauslösung durch elektromagnetische Störungen oder ESD-Ereignisse minimiert. Grundsätzlich ist hierzu eine Mindestenergie von 1 mJ zu fordern, bis zu der sicher keine Auslösung erfolgt. Andererseits ist bei völlig entladener Zelle eine Auslösung nur möglich, wenn die benötigte Triggerenergie in einem lokalen Speicher, beispielsweise einem Kondensator, in der Überwachungselektronik bereitgehalten wird. Um die Kosten für diesen Speicher in Grenzen zu halten, sollte eine sichere Auslösung bereits ab einer Energie von 500 mJ erfolgen können. Auch diese Voraussetzung kann durch den Einsatz des Rückhalte- oder Schmelzdrahtes und der reaktiven Schicht bzw. des reaktiven Elementes eingehalten werden. Diese lassen sich ohne weiteres so dimensionieren, dass sie die obigen Anforderungen erfüllen. Die vorgeschlagenen Ausgestaltungen zeigen auch keine Probleme der Langzeitstabilität, d.h. einer geforderten Lebensdauer von >10, vorzugsweise 15 Jahren bei 60° Umgebungstemperatur, über die die Ausfallrate der Überbrückungseinrichtung nicht nennenswert ansteigen darf.

Durch geeignete Ausgestaltung des elektrisch leitfähigen Überbrückungselementes kann ein Restwiderstand des ausgelösten Überbrückungselements von < 50 µΩ eingehalten werden. Dies ermöglicht eine thermische Abführung der Verlustleistung im ausgelösten Zustand des Überbrückungselementes auch bei den in typischen Anwendungen auftretenden Dauerströmen von mehreren 100, kurzzeitig auch bis zu mehreren 1000 Ampere. Weiterhin tritt bei Triggerung der Überbrückungseinrichtung der dargestellten Ausgestaltungen nur eine geringe zeitliche Verzögerung zwischen dem Senden des elektrischen Triggerimpulses und der Überbrückung der Zelle auf, die zwischen 1 ms und 20 ms liegt.

Die beschriebenen Ausgestaltungen lassen sich jeweils so umsetzen, dass der Triggereingang über den Rückhaltedraht bzw. die reaktive Schicht und das Überbrückungselement im nichtausgelösten Zustand elektrisch mit einem der beiden elektrischen Leiter und damit auch mit einem Pol der Energiespeicherzelle verbunden ist. Dies ermöglicht die Durchführung von Zelldiagnosefunktionen über den Triggereingang.

### Kurze Beschreibung der Zeichnungen

Die vorgeschlagene elektrische Energiespeicherzelle mit extern triggerbarer Überbrückungseinrichtung wird nachfolgend anhand von Ausführungsbeispielen in Verbindung mit den Zeichnungen nochmals näher erläutert. Hierbei zeigen:
- Fig. 1: ein erstes Beispiel für eine Ausgestaltung der Überbrückungseinrichtung an der Energiespeicherzelle;
- Fig. 2: ein zweites Beispiel für eine Ausgestaltung der Überbrückungseinrichtung an der Energiespeicherzelle; und
- Fig. 3: ein drittes Beispiel für eine Ausgestaltung der Überbrückungseinrichtung an der Energiespeicherzelle

### Wege zur Ausführung der Erfindung

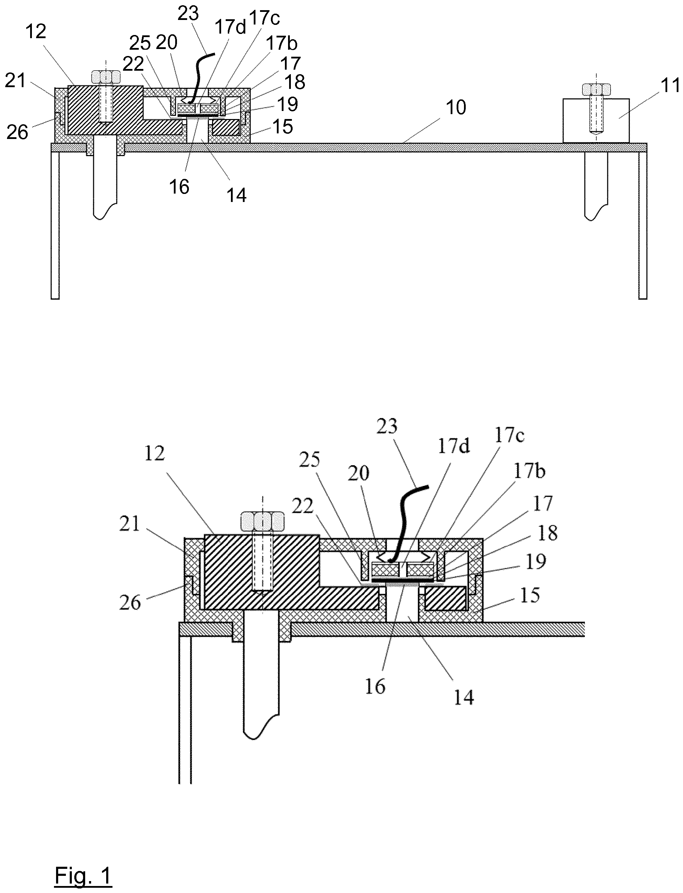

In Figur 1 ist in der oberen Teilabbildung a) eine beispielhafte Ausgestaltung der vorgeschlagenen Energiespeicherzelle mit der integrierten Überbrückungseinrichtung im Querschnitt dargestellt. Die Energiespeicherzelle weist dabei in bekannter Weise die beiden Pole 11, 12 auf, die aus dem Gehäuse 10 herausragen. Das Gehäuse 10 ist zumindest an seiner Oberseite elektrisch leitfähig ausgebildet, wobei der zweite Batteriepol 11 elektrisch leitfähig mit dem Gehäuse verbunden und der erste Batteriepol 12 gegenüber dem Gehäuse 10 isoliert ist. Der isolierte Batteriepol 12 weist eine Ausformung mit einem Durchbruch auf. In diesem Durchbruch ist ein Kontaktteil 14 als elektrischer Leiter der Überbrückungseinrichtung platziert, das elektrisch leitend mit dem Gehäuse 10 und damit auch mit dem nicht isolierten zweiten Batteriepol 11 verbunden ist. Vorteilhaft bildet der Isolationskörper 15, der den ersten Batteriepol 12 vom Batteriegehäuse 10 isoliert, einen Kragen aus, der das Kontaktteil 14 innerhalb des Durchbruchs zentriert und zuverlässig isoliert. Ringförmig um den Durchbruch ist die Oberfläche der Ausformung des Batteriepols 12 mit einem niedrigschmelzenden Material, bevorzugt einem Lotmaterial 22 beschichtet, wie dies in der vergrößerten Darstellung der unteren Teilabbildung b) der Figur 1 ersichtlich ist. Das Kontaktteil 14 ist auf der Oberseite ebenfalls mit einem niedrigschmelzenden Material, bevorzugt einem Lotmaterial 16, beschichtet. Die Höhenverhältnisse sind so gewählt, dass die Oberseite der Lotbeschichtung 16 des Kontaktteils 14 die Oberseite der Lotbeschichtung 22 der benachbarten Oberflächenbereiche des Batteriepols 12 überragt, vorteilhaft um etwa 0,2 mm.

Über diesen Oberflächenbereichen des Batteriepols 12 und des Kontaktteils 14 ist eine elektrisch leitfähige Folie 19 aus einem reaktiven Nanomaterial platziert und darauf ein Kontaktplättchen 17, bevorzugt aus Kupfer, mit einer Lotbeschichtung 18 auf der der reaktiven Folie 19 zugewandten Seite. Die reaktive Folie liegt dabei auf der Lotbeschichtung 16 des Kontaktteils 14 auf, ist jedoch aufgrund des oben beschriebenen Höhenverhältnisse von der Lotbeschichtung 22 des Batteriepols 12 beabstandet. Wird die reaktive Folie über die Triggersignalleitung 23 gezündet, so schmilzt durch die freigesetzte thermische Energie das Lotmaterial der Lotbeschichtungen 16, 18 und 22 zu beiden Seiten der reaktiven Folie auf und das Kontaktplättchen 17 wird mit dem Kontaktteil 14 und dem Batteriepol 12 verlötet. Das Kontaktplättchen 17 wird dabei mit dem elastischen Federelement 20 gegen die Oberflächen des Batteriepols 12 und des Kontaktteils 14 gedrückt. Durch die Lotverbindung ist die Batteriezelle zuverlässig und langzeitstabil mit einem sehr geringen Widerstand von typischerweise wenigen 10 µΩ überbrückt.

In einer besonders vorteilhaften Ausführungsform besteht das Kontaktplättchen 17 aus einer Leiterplatte 17b, die beidseitig mit einer Oberflächenmetallisierung 17c beschichtet ist, beispielsweise aus Kupfer. Die Metall- bzw. Kupferdicke dieser Oberflächenmetallisierung auf der Kontaktseite zum Kontaktteil 14 liegt vorteilhaft im Bereich von 100 bis 300 µm. Das Leiterplattenmaterial sorgt für mechanische Stabilität und mit seiner geringen thermischen Leitfähigkeit dafür, dass möglichst wenig von der beim Zünden der reaktiven Folie freigesetzten Energie ungenutzt verlorengeht. Die obere Oberflächenmetallisierung 17c der Leiterplatte 17b dient bevorzugt als Kontaktfläche für das Triggersignal. Dazu kann an diese obere Oberflächenmetallisierung 17c die Triggersignalleitung 23 beispielsweise angelötet oder die Fläche mit beliebigen sonstigen mechanischen Kontaktlösungen ankontaktiert werden. Zur Durchführung des Triggersignals durch die Leiterplatte 17b an die reaktive Folie 19 ist die Leiterplatte 17b vorteilhaft mit mindestens einer Durchkontaktierung 17d versehen.

Das federnde Element 20 sorgt für eine Fixierung der Position von Kontaktplättchen 17 und reaktiver Folie 19 auf dem Kontaktteil 14 und dafür, dass bei der schlagartigen Freisetzung der Energie nach dem Zünden der reaktiven Folie 19 das Kontaktplättchen 17 nicht weggeschleudert sondern in das aufgeschmolzene Lot gedrückt wird.

Zur Montageerleichterung besitzt der bevorzugt aus Kunststoff hergestellte obere Isolationskörper 21 vorteilhaft eine Struktur 25, die die laterale Position des Kontaktplättchens 17 definiert. Weiterhin besitzt der Isolationskörper 21 bevorzugt eine Ausformung 26, so dass der obere Isolationskörper 21 und der untere Isolationskörper 15 mechanisch zuverlässig - und ohne Beschädigung nicht wieder lösbar - ineinander einrasten und damit ein Gehäuse für die Überbrückungseinrichtung bilden. Dies ist in der Figur schematisch angedeutet.

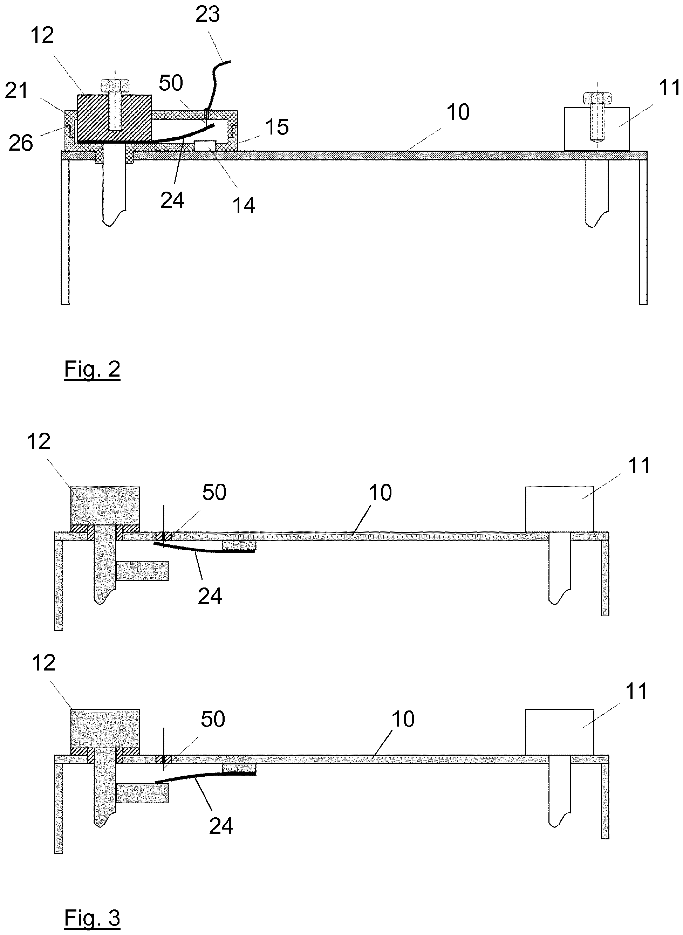

Figur 2 zeigt eine weitere beispielhafte Ausgestaltung der Überbrückungseinrichtung. In dieser Ausgestaltung ist ein elektrisch leitfähiges Kontaktplättchen 24 mit dem Batteriepol 12 verbunden. Das Kontaktplättchen 24 ist elastisch ausgebildet und wird durch den Rückhaltedraht 50 in einer vorgespannten Position über dem Kontaktteil 14 gehalten, das mit dem elektrisch leitfähigen Gehäuseoberteil verbunden ist. Die Auslösung des Überbrückungselementes erfolgt durch Schmelzen (Durchbrennen) des Rückhaltedrahts 50, indem über die Triggersignalleitung 23 ein geeigneter Strom oder Strompuls durch den Rückhaltedraht 50 geleitet wird. Vorzugsweise besitzt der Rückhaltedraht 50 einen Durchmesser im Bereich von 0,1 bis 0,2 mm. Damit lässt sich eine maximale Auslöseenergie im Bereich von 0,5 J erreichen. Die Zugfestigkeit ist dabei ausreichend, um Kontaktkräfte von mehreren Newton und damit ein ausreichend dickes Kontaktplättchen zu halten, mit dem ein elektrischer Widerstand von unter 100 µΩ in ausgelöstem Zustand erreicht wird.

Dieses Überbrückungselement kann sowohl außerhalb wie bei Figur 2 als auch innerhalb des Zellgehäuses 10 integriert werden, wie in Figur 3 schematisch angedeutet. In dieser Ausgestaltung ist das Kontaktplättchen 24 mit dem elektrisch leitfähigen Gehäuse 10 verbunden und am ersten Batteriepol 12 innerhalb des Gehäuses eine geeignete Gegenfläche ausgebildet, gegen die das gespannte Kontaktplättchen 24 im ausgelösten Zustand gedrückt wird. Der nicht ausgelöste Zustand ist dabei in der oberen Teilabbildung, der ausgelöste Zustand in der unteren Teilabbildung der Figur 3 schematisch dargestellt. Der Rückhaltedraht 50 wird bei dieser Ausgestaltung über eine isolierte Durchführung durch das Gehäuse 10 geführt.

### Bezugszeichenliste

- 10: Gehäuse der Batteriezelle
- 11: Zweiter Batteriepol
- 12: Erster Batteriepol
- 14: Elektrisch leitfähiges Kontaktteil
- 15: Isolationskörper
- 16: Beschichtung mit Lotmaterial
- 17: Kontaktplättchen
- 17b: Leiterplatte
- 17c: Oberseitenmetallisierung
- 17d: Durchkontaktierung
- 18: Lotbeschichtung
- 19: Reaktive Nanofolie
- 20: Federelement
- 21: Oberer Isolationskörper
- 22: Beschichtung mit Lotmaterial
- 23: Triggersignalleitung
- 24: Elektrisch leitfähiges Plättchen
- 25: Zentrierstruktur
- 26: Ausformung
- 50: Rückhaltedraht

## Patentansprüche

1. Elektrische Energiespeicherzelle, die
- ein zumindest teilweise elektrisch leitfähiges Gehäuse (10),
- wenigstens zwei Pole (11, 12) am elektrisch leitfähigen Gehäuse (10), von denen ein erster Pol (12) gegenüber dem Gehäuse (10) isoliert und ein zweiter Pol (11) elektrisch leitend mit dem Gehäuse (10) verbunden ist, und
- eine Überbrückungseinrichtung aufweist, die sich durch ein externes Signal ansteuern lässt, um die beiden Pole (11, 12) der Energiespeicherzelle elektrisch miteinander zu verbinden,
**dadurch gekennzeichnet,**
**dass** die Überbrückungseinrichtung zwischen dem ersten Pol (12) und dem Gehäuse (10) der Energiespeicherzelle wirkt,
**dass** die Überbrückungseinrichtung bei Ansteuerung mit dem externen Signal eine elektrisch leitende Verbindung zwischen einem ersten elektrischen Leiter und einem zweiten elektrischen Leiter (14) herstellt, wobei der erste elektrische Leiter mit dem ersten Pol (12) verbunden oder durch den ersten Pol gebildet ist und der zweite elektrische Leiter (14) mit dem Gehäuse (10) verbunden ist, und
**dass** der erste und zweite elektrische Leiter (14) so angeordnet sind, dass wenigstens ein erster in eine Raumrichtung orientierter Oberflächenbereich des ersten Leiters über einen Spalt von wenigstens einem zweiten in die gleiche Raumrichtung orientierten Oberflächenbereich des zweiten Leiters (14) beabstandet ist,
über den beiden Oberflächenbereichen ein elektrisch leitfähiges Überbrückungselement (17) angeordnet ist,
die Oberflächenbereiche und/oder eine zu den Oberflächenbereichen gerichtete Seite des Überbrückungselementes (17) mit einer lotfähigen, elektrisch leitfähigen Beschichtung (16, 18, 22) versehen sind, und
ein reaktives Element (19) über den Oberflächenbereichen angeordnet ist, in dem durch die Ansteuerung der Überbrückungseinrichtung mit dem externen Signal eine exotherme Reaktion ausgelöst wird, durch deren Wärmeentwicklung die lotfähigen Schichten (16, 18, 22) miteinander verschmelzen und/oder eine Lotverbindung zwischen dem Überbrückungselement (17) und den beiden elektrischen Leitern herstellen.

2. Energiespeicherzelle nach Anspruch 1,
**dadurch gekennzeichnet,**
**dass** die Überbrückungseinrichtung in den ersten Pol (12) der Energiespeicherzelle integriert ist.

3. Energiespeicherzelle nach Anspruch 1 oder 2,
**dadurch gekennzeichnet,**
**dass** das Überbrückungselement (17) eine reaktive Schicht als das reaktive Element (19) aufweist.

4. Energiespeicherzelle nach einem der Ansprüche 1 bis 3, **dadurch gekennzeichnet,**
**dass** ein Triggersignaleingang der Überbrückungseinrichtung, über den sich die Überbrückungseinrichtung mit dem externen Signal ansteuern lässt, über das Überbrückungselement (17) mit einem der elektrischen Leiter elektrisch leitend verbunden ist.

5. Energiespeicherzelle nach einem der Ansprüche 1 bis 4, **dadurch gekennzeichnet,**
**dass** die Überbrückungseinrichtung teilweise oder vollständig innerhalb des Gehäuses (10) angeordnet ist.

## Claims

1. An electrical energy storage cell having
- an at least partially electrically conductive housing (10),
- at least two terminals (11, 12) on the electrically conductive housing (10), of which a first terminal (12) is insulated from the housing (10) and a second terminal (11) is electrically conductively connected to the housing (10), and
- a bridging device, which can be actuated by an external signal to connect the two terminals (11, 12) of the energy storage cell electrically to one another,
**characterised in**
**that** the bridging device acts between the first terminal (12) and the housing (10) of the energy storage cell,
**that** the bridging device, when actuated by the external signal, produces an electrically conductive connection between a first electrical conductor and a second electrical conductor (14), wherein the first electrical is connected to the first terminal (12) or is formed by the first terminal and the second electrical conductor (14) is connected to the housing (10), and
**that** the first and second electrical conductor (14) are arranged such that at least one first surface region of the first conductor oriented in one spatial direction is distanced by a gap from at least one second surface region of the second conductor (14) oriented in the same spatial direction, an electrically conductive bridging element (17) is arranged above the two surface regions, the surface regions and/or a side of the bridging element (17) directed towards the surface regions are provided with a solderable electrically conductive coating (16, 18, 22), and a reactive element (19) is arranged above the surface regions, in which reactive element an exothermic reaction is triggered by the actuation of the bridging device by the external signal, the heat generated by said reaction fusing the solderable layers (16, 18, 22) to one another and/or producing a soldered connection between the bridging element (17) and the two electrical conductors.

2. The energy storage cell according to claim 1,
**characterised in that** the bridging device is integrated in the first terminal (12) of the energy storage cell.

3. The energy storage cell according to claim 1 or 2, **characterised in that** the bridging element (17) comprises a reactive layer as the reactive element (19).

4. The energy storage cell according to any one of claims 1 to 3, **characterised in that** a trigger signal input of the bridging device, via which the bridging device can be actuated by the external signal, is electrically conductively connected to one of the electrical conductors via the bridging element (17).

5. The energy storage cell according to any one of claims 1 to 4, **characterised in that** the bridging device is arranged partially or wholly within the housing (10).

## Revendications

1. Cellule de stockage d'énergie électrique, qui présente
- un boîtier (10) au moins partiellement conducteur d'électricité,
- au moins deux pôles (11, 12) sur le boîtier électriquement conducteur (10), dont un premier pôle (12) isole du boîtier (10) et un deuxième pôle (11) est relié de manière électriquement conductrice au boîtier (10), et
- un dispositif de pontage qui peut être commandé par un signal externe afin de connecter électriquement les deux pôles (11, 12) de la cellule de stockage d'énergie,
**caractérisé**
**en ce que** le dispositif de pontage agit entre le premier pôle (12) et le boîtier (10) de la cellule de stockage d'énergie,
**en ce que** le dispositif de pontage est lorsqu'il est commandé avec le signal externe établit une connexion électriquement conductrice entre un premier conducteur électrique et un second conducteur électrique (14), dans lequel le premier conducteur électrique est connecté au premier pôle (12) ou formé par le premier pôle et le deuxième conducteur électrique (14) est connecté au boîtier (10), et
**en ce que** les premier et deuxième conducteurs électriques (14) sont disposés de telle sorte qu'au moins une première surface du premier conducteur orientée dans une direction spatiale soit espacée sur un interstice d'au moins une seconde surface orientée du second conducteur (14) orientée dans la même direction spatiale,
au-dessus des deux surfaces, un élément de pontage électriquement conducteur (17) est disposé,
les surfaces et/ou un côté de l'élément de pontage (17) faisant face aux surfaces sont pourvus d'un revêtement électriquement conducteur soudable (16, 18, 22), et
un élément réactif (19) est disposé au-dessus des surfaces, dans lequel une réaction exothermique est déclenchée par l'activation du dispositif de pontage avec le signal externe, grâce au développement thermique duquel les couches soudables (16, 18, 22) fusionnent et/ou produisent une connexion de soudure entre l'élément de pontage (17) et les deux conducteurs électriques.

2. Cellule de stockage d'énergie selon la revendication 1,
**caractérisée**
**en ce que** le dispositif de pontage est intégré dans le premier pôle(12) de la cellule de stockage d'énergie.

3. Cellule de stockage d'énergie selon la revendication 1 ou 2,
**caractérisée**
**en ce que** l'élément de pontage (17) a une couche réactive en tant qu'élément réactif (19).

4. Cellule de stockage d'énergie selon une des revendications 1 à 3,
**caractérisé**
**en ce qu'**une entrée de signal de déclenchement du dispositif de pontage, par laquelle le dispositif de pontage peut être commandé avec le signal externe, via l'élément de pontage (17) est connectée de manière électriquement conductrice avec le conducteur électrique.

5. Cellule de stockage d'énergie selon une des revendications 1 à 4,
**caractérisée**
**en ce que** le dispositif de pontage est disposé partiellement ou complètement à l'intérieur du boîtier (10) .
